# EUROPEAN PATENT SPECIFICATION

(11) **EP 0 347 118 B1**
(45) Date of publication and mention of the grant of the patent: **16.03.1994**
(21) Application number: 89305843.8
(22) Date of filing: 09.06.1989
(51) Int. Cl.: G02B 6/38, G02B 6/28

(54) **Optical connector**
Optischer Stecker
Connecteur optique

(30) Priority: 14.06.1988 GB 8814034
(43) Date of publication of application: 20.12.1989
(73) Proprietor: THE WHITAKER CORPORATION, Wilmington, Delaware 19808 (US)
(72) Inventor: Ten Berge, Eduardus Franciscus, NL-5151 SL Drunen (NL)
(74) Representative: Warren, Keith Stanley

(56) References cited:
- EP-A- 0 160 864
- EP-A- 0 182 577
- WO-A-87/07035
- FR-A- 2 272 406
- US-A- 3 870 395
- APPLIED OPTICS, vol. 15, no. 9, September 1976, pages 2116-2120, American Institute of Physics, New York, US; M. IKEDA et al.: "Multimode optical fibers: steady state mode exciter"
- PATENT ABSTRACTS OF JAPAN, vol. 1, no. 150, 5th December 1977, page 7769 E 77; & JP-A-52 89 935

## Description

The subject invention relates to a fibre optic connector for splicing a fibre optic cable without the necessity of finishing the end of the fibre optic cable.

Fibre optic cables are presently used in such areas as voice and data transmission in the computer and communications industries. While fibre optic cables are very efficient optically for such uses, leading to low signal losses through the cables, one of the present drawbacks to their use is the complexity of the field termination, that is splicing of two free ends of fibre optic cable. It should be understood that two fibres to be connected must be very precisely aligned in an abutting manner, without the presence of such discontinuities as gaps and the like between the end faces of the two fibres. A gap between two end faces causes reflection of the incident light due to the mismatch of the index between the two compounds. That is, air is present within the gaps and rough surfaces which can cause the scattering of the light and attenuation of the signal. Thus, this is the difficulty which presents itself in the field, the preparation of optical fibres for their abutting connection without the use of precisely controllable equipment. Presently, two methods of field termination of plastic core fibre optic cables are utilized.

The first method is to provide a plastic ferrule for insertion of a free end of a fibre optic cable therethrough. The fibre optic cable is glued to the inner periphery of the ferrule and the end of the cable has to be ground down to provide a smooth abutting surface for a similar free end of a mating fibre cable. It should be appreciated that the grinding process is not an easy one to control while in the field without a controlled environment, such as a manufacturing facility where tolerances can be kept to a minimum by the use of high quality machine tools.

A second method is similar to the first method except, rather than grinding the free end of the fibre optic cable, a hot plate is provided by the end user where the hot plate is abutted to the jagged edge of the free end to melt the free end of the fibre optic cable to provide a flat, smooth surface. This method is particularly difficult to carry out as the melting of the plastic fibre must be precisely controlled, otherwise the plastic fibre could be burnt, or damaged by a poorly aligned hot plate. Each of these methods is difficult to carry out in the field in that the surfaces of the fibre optic cables must be finished in a smooth manner and in a square manner relative to the length of the cable for abutment against a mating cable. As mentioned above, it is necessary for two abutting fibre optic cables to be as flush as possible to prevent an air gap between the two cables thereby presenting a difference in index of refraction between the two cables.

It is therefore an object of the invention to provide a connection system where two unfinished ends of fibre optic cables can be terminated.

It is a further object of the invention to provide an optical connector where a fibre optic cable with an unfinished end can be terminated within the connector, where the end of the fibre need not be ground or otherwise polished.

The present invention consists in a fibre optical connector as defined in claim 1.

There is disclosed in EP-A-0 182 577, a fibre optical connector according to the preamble of claim 1. A heat recoverable tube in the bore of the housing surrounds the intermediate fibre and the end extends through the terminating section of the bore. Where the intermediate fibre is plastic clad, its cladding is removed before inserting it into the heat recoverable tube and fixing it therein.

US-A-3 870 395 discloses the use of an index of refraction matching fluid for optically connecting the ends of optical glass fibres.

A fibre optical connector for receiving an optical fibre having an optical end face, with the optical end of the fibre exposed at a free end of a rigid alignment ferrule at a forward end of the connector, is disclosed in WO87/07035.

The preferred embodiment of the invention will now be described by way of example with reference to the accompanying drawings, in which:

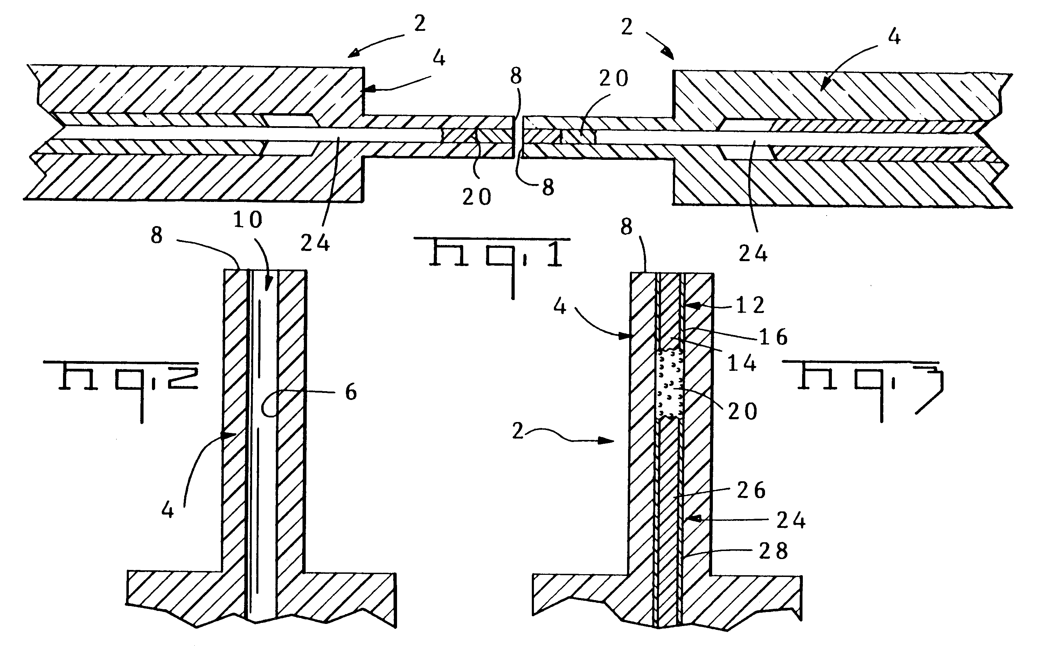

Figure 1A is a perspective view of the subject connector.
Figure 1 is a cross-sectional view of two of the optical connectors proximate to one another prior to abutment of their end faces.
Figure 2 is a cross-sectional view of an end of the connector housing prior to the insertion of the fibre optic cables.
Figure 3 is a cross-sectional view similar to that of Figure 2, showing two fibre optic cables terminated within the through bore of the housing.
Figure 3A is a diagrammatical view show the reflection of the incident light within the connection.
Figures 4-7 show cross-sectional views similar to that of Figures 2 and 3, showing the sequence of manufacturing the connector.
Figure 8 is an alternate embodiment of the invention shown in Figures 1-7 above.

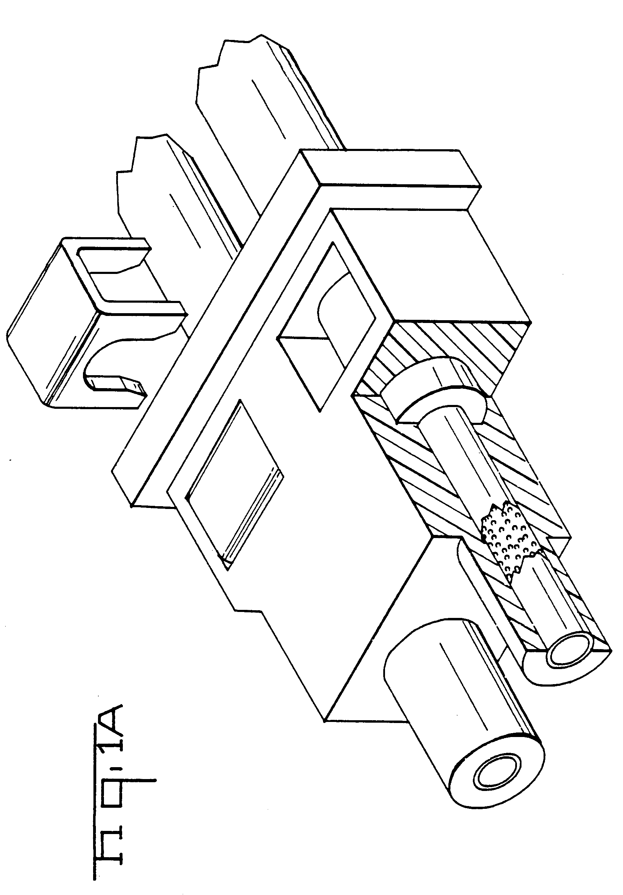

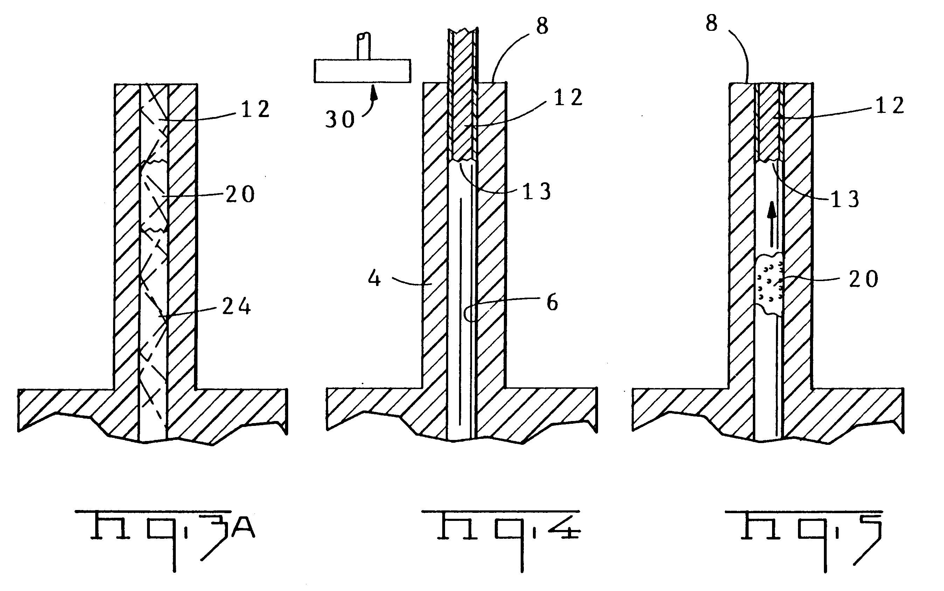

With reference first to Figures 1 and 3, the subject invention relates to a fibre optic connector for mating abutment with a similar connector where end faces, such as 8, are in optical abutment against one another to provide for optical continuity of the signal to be transmitted. It should be understood that the two connectors shown in Figure 1 are shown in diagrammatic view without means for fixedly retaining the two connectors in place, but it should be understood that such conventional means as a rotatable retaining nut on one connector body which is matable with a threaded outer diameter on the mating connector body can be used for such retention means.

With reference to Figure 2, the optical connector housing 4 is constructed of an optically isolating material, that is, non-transparent to light, and includes a through bore 10 which includes an inner diameter, such as 6, which terminates at the end or front face 8 of the connector housing.

With reference now to Figure 3, the connector 2 further comprises a first short fibre 12 which includes a plastic core 14 surrounded by a thin cladding material, such as 16. In the preferred embodiment of the invention, the center plastic core 14 is approximately 1000 mils in thickness, whereas the cladding which surrounds the plastic core is approximately 15-20 mils in thickness. Furthermore, in the preferred embodiment of the invention, the index of refraction of the center core portion is approximately 1.49 whereas the index of refraction of the cladding material is 1.42.

With reference still to Figure 3, a gel material, such as 20, is included within the optical connector 2 which has an index of refraction substantially equal to that of the core 14, that is the index of refraction of the gel material is substantially equal to 1.49. Also, the index of refraction of the housing material should be equal to, or less than, that of the cladding, which in this case is approximately equal to 1.42. A fluoride plastic, PTFE, would be suitable for these purposes.

Also shown in Figure 3 is a further fibre optic cable 24 having inner cores 26 and outer cladding 28 substantially identical to the core and outer cladding of the first short fibre in the connector. It should be understood that the second fibre 24 is the fibre to be terminated in the field.

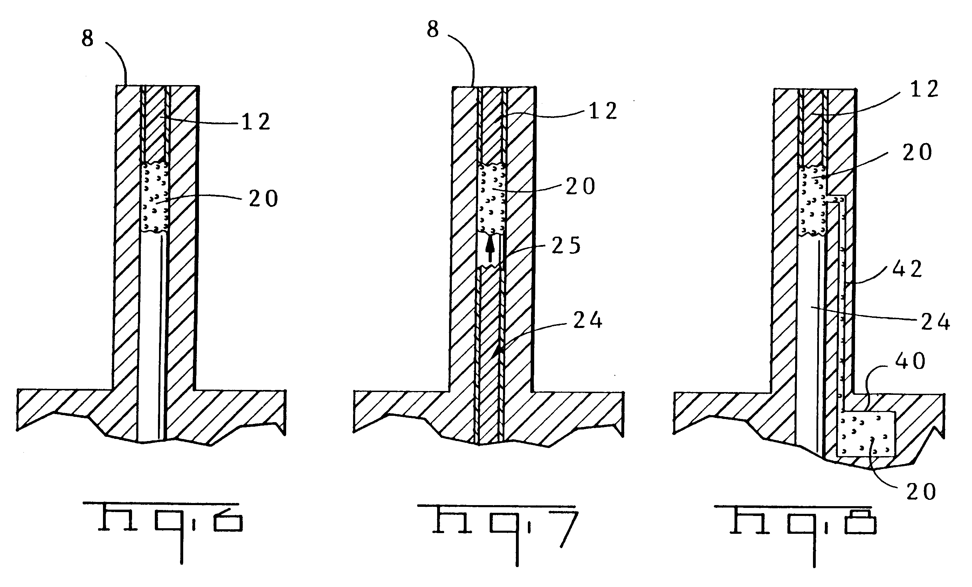

With reference to Figures 4-7, the method of making the fibre optic connector and making the fibre optic connection will be described in greater detail. As shown in Figure 4, a short length of fibre 12 is provided in the inner bore 6 of the connector housing 4 and affixed to the inner bore. It should be noted that a portion of the unfinished end of the fibre cable is projecting beyond the end face 8 of the housing. With the short section of fibre installed within the through bore of the housing, the unfinished free end of the short fibre 12 can be subjected to such finishing and polishing means as a rotary surface grinder, such as 30, which is brought into finishing abutment to polish the end of the optical fibre.

After the end of the fibre is finished, a section of gel is disposed within the through bore 6 of the connector housing, as shown in Figure 5, and is moved into optical abutment with the opposite end 13 of the short fibre 12. It should be noted that the opposite end 13 remains unfinished, that is, the opposite end 13 has not been ground or polished as the forward end. When the gel 20 is in optical abutment with the short fibre 12, the gel which is adjacent or which abuts the end face 13 of the short fibre 12 conforms to the contour of the unfinished face 13, as shown in Figure 6. It would be the connector of Figure 6 which would be shipped to a customer for field installation of a second fibre, such as 24.

With the connector, as assembled in Figure 6 in hand, the interconnection of the second fibre 24 includes only breaking an end of the fibre 24 and inserting the fibre 24 into the through bore 6 of the housing 4 and further into optical abutment with the gel 20. Full insertion of the second fibre 24 into the gel 20 causes the gel, which is adjacent to the front face 25 of the second fibre, to similarly conform to the front face 25 of the second fibre 24, as shown in Figure 7. With the connector 2 assembled as described above, and with the index match between the fibre core 14 and the gel 20, the light passes through the gel without refraction, as shown in Figure 3A; in other words, the reflection of the incident light is identical to that through a continuous length of fibre.

The advantages of the above-mentioned fibre optic connector should be appreciated to those skilled in the art. First, the fibre optic connector is easily manufactured. The plastic housings 4 could be mass fed through an assembly procedure with the end faces 8 aligned in a common plane, with a reel of the fibre optic cable positioned proximate to the housings. A short length of fibre could be sheared from the roll of fibre optic cable and stitched into the through bore of the connector housing with only a portion of the end of the short fibre, such as 12, extending from the front face 8 of the housing. The housings with the short fibre could then be automatically subjected to the surface grinder 30 and, subsequently, the gel could be dispensed into the opposite end of the through bore 10 of the housing. It should be appreciated, however, that the gel 20 could be dispensed within the through bore 10 of the housing prior to the insertion of the short length of fibre 12. It should be appreciated that the free end of the fibre optic cable 12, which projects beyond the end face 8 of the housing, can be polished within very close tolerances within a factory atmosphere, as highly accurate machine tools and fixtures can be in place for such manufacturing tolerances.

It should be further appreciated that the installation of the second fibre 24 is further simplified by the connector of the subject invention in that the forward end 25 need not be polished in the field but merely can be broken in the field and inserted into the through bore of the connector and into the gel 20.

With reference now to Figure 8, the inventive connector of Figures 1-7 can be modified to include an extra reservoir of gel, in the event the connectors are to be used in extreme conditions; such as large variances in temperature which could effect the volume of the gel, or in physically hazardous conditions where the fibres may be subject to tension. In this event a reservoir 40 can be included which contains an extra supply of gel 20 in communication with the gel intermediate the fibres 12 and 24, by means of a slit or aperture 42; either a volumetric change in the gel between the two fibres 12 and 24, or a physical movement the fibres 12 and 24 would be taken up with the extra gel found in the reservoir, or would be added to the reservoir.

## Claims

1. A fibre optical connector (2) for optical alignment and connection with a mating similar optical device, the connector (2) comprising an opaque connector housing (4), having a through bore (10) having an inner diameter (6), and opening into a front mating end of the housing (4), an intermediate optical fibre (12) in the bore (10) having a front polished end face coplanar with the front end of the housing (4) and an unfinished end face positioned in a rearward terminating section of the bore (10), a fibre matching gel (20) being positioned against said unfinished end face; wherein the intermediate fibre (12) includes both a fibre core (14) and cladding (16) surrounding said core (14) and is fixed in the bore (10), the inner diameter (6) of which is substantially equal to the diameter of said cladding (16), the front end of the housing (4) presenting a front mating face (8) adjoining the front polished end face of the intermediate fibre, said terminating section of the bore (10) communicating with a rear fibre receiving bore, for the insertion therethrough of a fibre cable (24) to be terminated having an unfinished end face and an end portion bared of its surrounding insulation, into the terminating section of said bore (10), to bring said unfinished end face of said fibre cable (24) against said matching gel (20) to couple said fibre cable (24) to said intermediate fibre (12), characterized in that said connector housing (4) includes an opening, extending transversely of, and communicating with, said fibre receiving bore (10) which opening receives a fibre retaining clip therethrough for engaging said fibre cable (24).

2. A fibre optical connector as claimed in claim 1, characterized in that said rear fibre receiving bore is profiled to receive a fibre cable (24) having insulation surrounding the core (26) and cladding (28) thereof.

## Patentansprüche

1. Faseroptischer Verbinder (2) zur optischen Ausrichtung und Verbindung mit einer ähnlichen, damit zusammenzufügenden optischen Einrichtung, wobei der Verbinder (2) ein opakes Verbindergehäuse (4) aufweist, das eine Durchgangsbohrung (10) mit einem inneren Durchmesser (6) hat, die sich in ein vorderes Fügeende des Gehäuses (4) öffnet, mit einer optischen Zwischenfaser (12) in der Bohrung (10), die eine polierte vordere Endfläche hat, die mit dem vorderen Ende des Gehäuses (4) koplanar ist, und die eine nicht bearbeitete Endfläche hat; die in einem ruckwärtigen Anschlußabschnitt der Bohrung (10) positioniert ist, wobei ein zu der Faser passendes Gel (20) gegen die nicht bearbeitete Endfläche positioniert ist, wobei die Zwischenfaser (12) einen Faserkern (14) und eine den Kern (14) umgebende Umhüllung (16) aufweist und in der Bohrung (10) befestigt ist, deren innerer Durchmesser (6) im wesentlichen gleich dem Durchmesser der Umhüllung (16) ist, wobei das vordere Ende des Gehäuses (4) eine vordere Fügefläche (8) bietet, die der vorderen polierten Endfläche der Zwischenfaser benachbart ist, wobei der Anschlußabschnitt der Bohrung (10) mit einer rückwärtigen Faseraufnahmebohrung in Verbindung steht, um dadurch ein anzuschließendes Faserkabel (24), das eine nicht bearbeitete Endfläche und einen Endabschnitt hat, der von seiner umgebenden Isolierung freigelegt ist, in den Anschlußabschnitt der Bohrung (10) einzusetzen, um die nicht bearbeitete Endfläche des Faserkabels (24) gegen das dazu passende Gel (20) zu bringen, um das Faserkabel (24) mit der Zwischenfaser (12) zu koppeln, **dadurch gekennzeichnet**, daß das Verbindergehäuse (4) eine Öffnung aufweist, die sich quer zu der Faseraufnahmebohrung (10) erstreckt und mit dieser in Verbindung steht, welche Öffnung einen Faserhalteclip zum Ergreifen des Faserkabels (24) aufnimmt.

2. Faseroptischer Verbinder nach Anspruch 1, **dadurch gekennzeichnet**, daß die rückwärtige Faseraufnahmebohrung so profiliert ist, daß sie ein Faserkabel (24) aufnimmt, das eine dessen Kern (26) und Umhüllung (28) umgebende Isolierung hat.

## Revendications

1. Connecteur (2) de fibre optique pour un alignement et une connexion optiques avec un dispositif optique similaire complémentaire, le connecteur (2) comportant un boîtier opaque (4) de connecteur traversé par un passage (10) ayant un diamètre intérieur (6) et s'ouvrant dans une extrémité frontale d'accouplement du boîtier (4), une fibre optique intermédiaire (12) dans le passage (10) ayant une face extrême frontale polie coplanaire avec l'extrémité frontale du boîtier (4) et une face extrême non finie positionnée dans un tronçon arrière de terminaison du passage (10), un gel (20) d'adaptation de fibre étant positionné contre ladite face extrême non finie ; dans lequel la fibre intermédiaire (12) comprend un coeur (14) de fibre et une gaine (16) entourant ledit coeur (14), et est fixée dans le passage (10) dont le diamètre intérieur (6) est sensiblement égal au diamètre de ladite gaine (16), l'extrémité frontale du boîtier (4) présentant une face frontale (8) d'accouplement contiguë à la face extrême frontale polie de la fibre intermédiaire, ledit tronçon de terminaison du passage (10) communiquant avec un passage arrière de réception de fibre dans lequel est destiné à être inséré un câble à fibre (24) devant être terminé et ayant une face extrême non finie et une partie extrême dénudée de l'isolant l'entourant, l'insertion étant réalisée jusque dans le tronçon de terminaison dudit passage (10) pour amener ladite face extrême non finie dudit câble à fibre (24) contre ledit gel d'adaptation (20) afin de coupler ledit câble à fibre (24) à ladite fibre intermédiaire (12), caractérisé en ce que ledit boîtier (4) du connecteur présente une ouverture s'étendant transversalement audit passage (10) de réception de fibre et communiquant avec lui, laquelle ouverture reçoit à travers elle une attache de retenue de libre destinée à engager ledit câble à fibre (24).

2. Connecteur de fibre optique selon la revendication 1, caractérisé en ce que ledit passage arrière de réception de fibre est profilé de façon à recevoir un câble à fibre (24) ayant un isolant entourant son coeur (26) et sa gaine (28).
